# EUROPEAN PATENT SPECIFICATION

(11) **EP 4 403 657 B1**
(45) Date of publication and mention of the grant of the patent: **10.12.2025**
(21) Application number: 22868482.5
(22) Date of filing: 12.08.2022
(51) Int. Cl.: C22B 5/10, C22B 1/00, C21B 5/00, C22C 35/00, C10B 55/02, C10B 57/04, C10B 57/12, C10L 5/06, C10L 5/32, C10L 10/04, C01B 32/00, C10L 5/04, C10L 5/10, C21B 13/00, C22B 1/242, C22B 1/245

(54) **SOLID AGGLOMERATE FOR USE IN SIDERURGICAL REDUCTION FURNACES**
FESTES AGGLOMERAT ZUR VERWENDUNG IN SEITENROVATISCHEN REDUKTIONSÖFEN
AGGLOMÉRAT SOLIDE À UTILISER DANS UN FOUR DE RÉDUCTION SIDURGIQUE

(30) Priority: 16.09.2021 BR 102021018410
(43) Date of publication of application: 24.07.2024
(73) Proprietor: Tecnored Desenvolvimento Tecnologico S.A., CEP-12401-010 Pindamonhangaba São Paulo (BR)
(72) Inventor: DE OLIVEIRA, Ronald, Lopes, 12405-278 Pindamonhangaba, SP (BR); GONÇALVES, Guilherme Francisco, 12412-520 Pindamonhangaba, SP (BR); POTTER, Stephen Michael, 22250-145 Rio de Janeiro, RJ (BR); LOVATTI, Rafael, Araújo, 12422-150 Pindamonhangaba, SP (BR)
(74) Representative: Clarke, Modet y Cía., S.L.
(86) International application number: PCT/BR2022/050317
(87) International publication number: WO 2023/039651

(56) References cited:
- EP-A1- 2 937 407
- WO-A1-2006/015597
- BR-A- PI0 700 982
- CA-A- 697 251
- GB-A- 396 087
- US-A- 3 158 547

## Description

### FIELD OF THE INVENTION

The present invention relates to solid agglomerates. More specifically, the present invention relates to solid agglomerates for use in steel reduction furnaces.

### BACKGROUND OF THE INVENTION

One of the main pieces of equipment where the iron reduction process takes place is called a Blast Furnace, and its function is to cause the separation of Fe iron from its Fe₂O₃ ore. This separation takes place by means of chemical reduction, which involves separating a metal from its oxide, and is carried out using a reducing agent. This reducing agent is a material that must be more attractive to oxygen, under the conditions of the operation, than the metal to be reduced. Main reducing agent used in the steel industry is coke, which comes from mineral coal.

Steel industry relies heavily on metallurgical coal, which accounts for a large proportion of the final cost of the steel produced. Mineral coal for integrated coking steelmaking is called coking coal, which is an essential substance in the reduction of iron ore to metallic iron, as it combines with oxygen to create carbon dioxide, iron and slag.

The class of coal commonly used for steelmaking is bituminous coal (soft coal) which forms a solid mass when heated (coking coal); on the other hand, if it does not soften or aggregate when heated, it is called non-coking coal.

Today, the use of agglomerates in the steel industry is becoming increasingly common. Agglomeration process consists of grouping fine-grained materials with the aim of obtaining a larger product through the use of binders. Through this process it is possible to obtain, for example, high-quality metal agglomerates or coal briquettes, taking advantage of the small fractions that are usually discarded. In some cases, coal agglomerates can replace coking coal and metal agglomerates can replace iron ore.

Among the different agglomeration processes, the coal briquetting technique has been gaining ground in the industry. This technique, which can be used for both mineral and vegetable coal, generally involves the following steps: (i) granulometric balancing of the coal or biomass particles; (ii) mixing of binders (agglomerants); (iii) mechanical compaction; and (iv) drying of the briquettes. The documents below describe examples of coal briquettes and its respective production processes.

Document US8585786B2, for example, describes a method and system for briquetting solid fuel, such as coal. In this document, the solid fuel is conveyed through a continuous feed solid fuel treatment plant, treated with electromagnetic energy and briquetted after treatment.

Document WO2014098413A1 describes a coal briquette and a method for manufacturing it. Said method for manufacturing coal briquettes comprises the steps of (i) supplying pulverized coal, (ii) producing a mixture obtained by mixing between 1 and 5 parts by weight of a hardening agent and between 5 and 15 parts by weight of a binder in relation to 100 parts by weight of pulverized coal, and (iii) shaping the mixture. In the step of supplying the pulverized coal, the pulverized coal comprises (i) more than 0 and not more than 50% by weight of low-grade coal and (ii) a balance of coal ash. The low-grade coal has between 25% by weight and 40% by weight of a volatile fraction (dry basis) and has a crucible expansion number of more than 0 and less than 3.

Document WO2013152959A1 describes a process for producing a briquette containing coals, where the coals together with a binder system are subjected to mixing with the introduction of steam and the mixture obtained is subjected to pressing to form briquettes. Here, at least one of the steps: (i) drying the carbon carriers before mixing, (ii) setting the temperature of the carbon carriers to be mixed with the binder system before mixing in a predefined temperature range, (iii) heat treatment of the briquettes after pressing, is carried out by means of direct or indirect interaction with superheated steam. Residual steam obtained is used as at least part of the steam introduced during mixing.

Document AU2008203855B2 describes a process for forming a briquette comprising low rank coal and aggregate material, characterized in that it comprises: drying a feed of low rank coal to produce a dry coal with a moisture content of between 8 and 16% by weight; mixing the dry coal with an aggregate material; and compacting the dry coal and aggregate material mixture into briquettes.

Document GB 396 087 A relates to the production of smokeless fuels, particularly from coking and non-coking coals, aiming to obtain a hard, compact fuel of consistent quality and convenient form. The process involves reducing coking coal to uniform lumps and mixing it with finely divided non-coking coal inside a rotary or similar retort. As the coking coal lumps travel through the retort, they soften and act as rolling nuclei, picking up and binding with the powdered non-coking coal. This forms a coating around the lumps, with thickness dependent on fusion properties, material proportions, temperature, and processing speed. The coating minimizes adhesion to equipment surfaces and between the fuel lumps themselves

As mentioned above, coal briquettes can be used in the process of reducing iron ore or its agglomerates in steelmaking furnaces. However, if used directly in the furnace without prior coking treatment, these briquettes end up sticking together, forming so-called "bunches". This is because, inside the furnace, the heat causes the surfaces of the briquettes to soften, favoring the bonding of one briquette with another or with the ore.

As a result, there is no solid agglomerate in the state of the art, such as coal briquettes, which can be used directly inside reduction furnaces without prior treatment, under penalty of forming bunches and making the process unfeasible.

The invention proposed here solves the problems of the state of the art described above in a simple and efficient way.

### SUMMARY OF THE INVENTION

The first objective of the present invention is to provide a solid agglomerate for use in a steelmaking furnace that does not require prior coking treatment.

A second objective of the present invention is to provide a solid agglomerate for use in a steelmaking furnace that prevents the agglomerates inside the furnace from sticking together (forming bunches) when it are heated.

In order to achieve the objectives described above, the present invention provides a solid agglomerate for use in a steel reduction furnace, comprising a core formed by a first composition and a coating formed by a second composition, where the second composition comprises at least one compound that acts as an inert sacrificial material during the reduction process inside the steel furnace.

### BRIEF DESCRIPTION OF THE FIGURES

Detailed description presented below refers to the attached figures and its respective reference numbers.

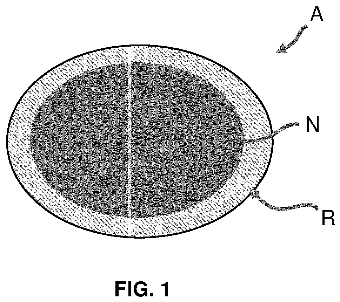

**Figure 1** illustrates a schematic sectional view of a solid agglomerate according to a preferred embodiment of the present invention.

### DETAILED DESCRIPTION OF THE INVENTION

First of all, it should be noted that the following description is based on a preferred embodiment of the invention. As will be evident to anyone skilled in the art, however, the invention is not limited to this particular embodiment.

The present invention therefore provides a solid agglomerate **A,** illustrated in **figure 1****,** for use in a steel reduction furnace. The solid agglomerate **A** of the present invention comprises a core **N** formed by a first composition and a coating **R** formed by a second composition, where the second composition, which forms the coating **R,** comprises at least one compound that acts as an inert sacrificial material during the reduction process inside the steelmaking furnace.

Solid agglomerate **A** of the present invention can be, for example, a fuel coal briquette or a metallic agglomerate, such as a pellet or a ferrous briquette.

In the case of the fuel briquette, preferably the first composition, which forms the core **N,** comprises at least one coking coal and at least one binder. **N** core material, therefore, is the coking material commonly used in fuel briquettes. More preferably, the first composition, which forms the **N** core, comprises 60 to 70% by mass of coking coal and 6 to 10% by mass of binder.

Preferably, the second composition, which forms the **R** coating, comprises a non-coking coal, or residue thereof, and at least one binder. Coal in the **R** coating composition can be, for example, coke grindings or coal waste in general, low-quality coals, etc. It's worth noting here that any inert coal waste (non-coking) can be used in the **R**-coating composition. This way, when heating inside the reduction furnace, the **R**-coating material won't coking, which prevents sticking between the surfaces of the agglomerates and, consequently, the formation of bunches.

More preferably, the second composition, which forms the **R-**coating, comprises 70 to 95% by mass of non-coking coal, coke grindings, coal waste or any combination thereof, and 5 to 15% by mass of binder.

In a second embodiment of the present invention, the solid agglomerate **A** is a metallic agglomerate, such as a ferrous pellet or briquette. In this case, an inert material, preferably metallic, is used in the **R**-coating of the agglomerate to act as a sacrificial material. Core **N** would be formed by the material of interest.

Solid agglomerate **A** of the present invention can be manufactured in any existing geometric shape, so that the scope of protection of the present invention is not limited to the oval shape shown in **figure 1****.**

Thus, as explained above, the present invention provides a solid agglomerate **A** for use in a steelmaking furnace that does not require prior coking treatment since the sacrificial material in the coating prevents the agglomerates from sticking together (forming bunches) inside the furnace when it is heated.

## Claims

1. Solid agglomerate (A) for use in a steel reduction furnace, comprising a core (N) formed by a first composition and a coating (R) formed by a second composition, wherein the second composition comprises at least one compound that acts as an inert sacrificial material during the reduction process inside the steel furnace;
**characterized in that** the second composition comprises a non-coking coal, or residue thereof, and at least one binder.

2. Solid agglomerate (A) according to claim 1, **characterized in that** the first composition, which forms the core (N), comprises a coking coal and at least one binder.

3. Solid agglomerate (A) according to claim 2, **characterized in that** the first composition forming the core (N) comprises:
60 to 70% by mass of coking coal; and
6 to 10% by mass of binder.

4. Solid agglomerate (A) according to claim 1, **characterized in that** the second composition, which forms the coating (R), comprises:
70 to 95% by mass of non-coking coal, coke grindings or coal residues; and
5 to 15% by mass of binder.

## Patentansprüche

1. Festes Agglomerat (A) zur Verwendung in einem Stahlreduktionsofen, umfassend einen Kern (N), der durch eine erste Zusammensetzung gebildet wird, und eine Beschichtung (R), die durch eine zweite Zusammensetzung gebildet wird, wobei die zweite Zusammensetzung mindestens eine Verbindung umfasst, die als inertes Opfermaterial während des Reduktionsprozesses im Inneren des Stahlofens wirkt;
**dadurch gekennzeichnet, dass** die zweite Zusammensetzung eine nicht verkokende Kohle oder einen Rückstand davon und mindestens ein Bindemittel umfasst.

2. Festes Agglomerat (A) nach Anspruch 1, **dadurch gekennzeichnet, dass** die erste Zusammensetzung, die den Kern (N) bildet, eine Verkokungskohle und mindestens ein Bindemittel umfasst.

3. Festes Agglomerat (A) nach Anspruch 2, **dadurch gekennzeichnet, dass** die erste Zusammensetzung, die den Kern (N) bildet, Folgendes umfasst:
60 bis 70 Masse-% Verkokungskohle; und
6 bis 10 Masse-% eines Bindemittels.

4. Festes Agglomerat (A) nach Anspruch 1, **dadurch gekennzeichnet, dass** die zweite Zusammensetzung, die die Beschichtung (R) bildet, Folgendes umfasst:
70 bis 95 Masse-% nicht verkokende Kohle, Koksmahlgut oder Kohlerückstände; und
5 bis 15 Masse-% eines Bindemittels.

## Revendications

1. Agglomérat solide (A) à utiliser dans un four de réduction de l'acier, comprenant un cœur (N) formé par une première composition et un revêtement (R) formé par une deuxième composition, dans lequel la deuxième composition comprend au moins un composé qui agit comme un matériau sacrificiel inerte pendant le procédé de réduction à l'intérieur du four d'acier ;
**caractérisé en ce que** la deuxième composition comprend un charbon non cokéfiable, ou un résidu de celui-ci, et au moins un liant.

2. Agglomérat solide (A) selon la revendication 1, **caractérisé en ce que** la première composition, qui forme le cœur (N), comprend un charbon cokéfiable et au moins un liant.

3. Agglomérat solide (A) selon la revendication 2, **caractérisé en ce que** la première composition formant le cœur (N) comprend :
60 à 70% en masse de charbon cokéfiable ; et
6 à 10% en masse de liant.

4. Agglomérat solide (A) selon la revendication 1, **caractérisé en ce que** la deuxième composition, qui forme le revêtement (R), comprend :
70 à 95% en masse de charbon non cokéfiable, des broyages de coke ou des résidus de charbon ; et
5 à 15% en masse de liant.
